# DEMANDE DE BREVET EUROPEEN

(11) **EP 0 669 516 A1**
(43) Date de publication de la demande: **30.08.1995**
(21) Numéro de dépôt: 95400263.0
(22) Date de dépôt: 08.02.1995
(51) Int. Cl.: G01B 17/02, G01N 29/26

(54) **Procédé et dispositif de contrôle par ultrasons de facettes sur la surface intérieure de la paroi d'une gaine**

(30) Priorité: 25.02.1994 FR 9402214
(71) Demandeur: ZIRCOTUBE, F-92400 Courbevoie (FR)
(72) Inventeur: Senevat, Jean, F-44250 Saint Brevin les Pins (FR); Roy, Christian, F-44119 Grand Champ des Fontaines (FR); Lucas, Eric, F-44300 Nantes (FR)
(74) Mandataire: Bouget, Lucien

(57) **Abrégé**

La gaine tubulaire (1) comporte une surface intérieure de forme sensiblement prismatique présentant des facettes successives. Une tête de contrôle ultrasonore (3) permetl'émission d'ondes ultrasonores sous forme d'impulsions depuis l'extérieur de la gaine (1) de manière que les ondes ultrasonores traversent la paroi de la gaine (1) et assurent un balayage de la paroi sur toute sa périphérie. On règle la fréquence des impulsions ultrasonores en fonction de la vitesse de balayage circonférentielle de la gaine (1). On enregistre un signal ultrasonore réfléchi par la surface intérieure de la gaine (1) et on analyse le signal réfléchi pour réaliser le contrôle du nombre et de l'amplitude des facettes et la variation d'épaisseur de la gaine tubulaire (1) sur un tour.

## Description

L'invention concerne un procédé et un dispositif de contrôle par ultrasons de facettes sur la surface intérieure de la paroi d'une gaine tubulaire, en particulier de la gaine d'un crayon combustible pour réacteur nucléaire.

Les crayons combustibles pour réacteur nucléaire comportent généralement une gaine de forme tubulaire et à l'intérieur de la gaine, des pastilles en matériau combustible généralement réalisées par frittage qui sont empilées suivant la direction longitudinale de la gaine tubulaire.

Du fait du gonflement des pastilles de matériau combustible sous irradiation, la partie périphérique des pastilles vient en contact avec une certaine pression contre la surface intérieure de la gaine, lorsque le combustible est utilisé dans le coeur d'un réacteur nucléaire.

Il peut en résulter des interactions entre les pastilles et la gaine qui sont susceptibles de conduire à une détérioration de la gaine favorisée par la température d'utilisation du combustible.

On a proposé de limiter les possibilités de mise en contact des pastilles et de la gaine, pour éviter dans la mesure du possible, les inconvénients liés à ce phénomène appelé interaction pastilles-gaines (IPG).

On a par exemple proposé dans le cas de combustible pour un réacteur refroidi par de l'eau bouillante, d'utiliser des tubes de gainage dont la surface interne comporte des rainures dans le sens longitudinal, de manière à limiter la surface de contact entre les pastilles et la gaine tout en permettant un transfert thermique suffisant de la chaleur produite par le combustible nucléaire vers l'extérieur de la gaine.

Dans le cas de crayons pour assemblages combustibles destinés à des réacteurs nucléaires à eau sous pression, on a également proposé d'utiliser des gaines tubulaires dont la surface interne de forme prismatique est constituée par des facettes ayant toutes une même largeur et qui sont disposées successivement et régulièrement suivant la surface interne de la gaine.

De ce fait, les pastilles combustibles qui ont un contour circulaire sont susceptibles de venir en contact avec les facettes de la surface intérieure de la gaine, dans des zones isolées les unes des autres, suivant des génératrices des pastilles.

Selon ce principe, on a réalisé des gaines qui comportent trente ou quarante facettes sur leur surface interne.

Dans le cadre des études de développement et de la fabrication des gaines tubulaires comportant des facettes sur leur surface interne, il est nécessaire de disposer d'une méthode de contrôle des facettes réalisées sur la surface interne des gaines tubulaires.

En particulier, il est nécessaire de contrôler le nombre de facettes réalisées suivant toute la périphérie interne du tube et la largeur des facettes dans la direction périphérique. Il faut en effet contrôler que tous les tubes sortant de fabrication présentent le même nombre de facettes internes et que toutes les facettes ont une même amplitude, suivant la périphérie de la surface interne de la gaine et sur toute la longueur du tube.

Pour effectuer le contrôle d'épaisseur des gaines de crayons combustibles en fin de fabrication, il est connu d'utiliser une tête de contrôle par ultrasons de forme annulaire qui est engagée en position coaxiale autour de la gaine tubulaire à contrôler et qui est mise en rotation autour de son axe, à grande vitesse.

La tête de contrôle par ultrasons comporte un ou plusieurs transducteurs qui émettent des ondes ultrasonores dans des directions sensiblement radiales vers l'intérieur du tube. Pour effectuer le contrôle d'épaisseur du tube de manière continue ou dans des zones successives suivant sa longueur, on produit un déplacement relatif du tube et de la tête de contrôle mise en rotation, de manière à réaliser un balayage de toute la surface périphérique du tube, suivant une trajectoire hélicoïdale, par un faisceau d'ondes ultrasonores.

L'analyse du signal correspondant aux ondes ultrasonores réfléchies sur la surface intérieure de la gaine tubulaire permet de réaliser une mesure et un contrôle d'épaisseur de la gaine tubulaire.

Dans le cas où l'on utilise des ondes ultrasonores qui sont émises sous forme d'impulsions ou de trains d'ondes successifs, on peut effectuer des mesures en des points isolés répartis suivant la périphérie du tube, le nombre de points de mesure sur la périphérie du tube, c'est-à-dire sur un tour complet dépendant de la vitesse de rotation de la tête de contrôle et de la fréquence de répétition des trains d'ondes ultrasonores. Cependant, un tel procédé de mesure n'a jamais été utilisé pour contrôler le nombre et l'amplitude des facettes internes d'un tube de gainage à facettes. En outre, si un tel procédé était utilisé pour le contrôle des facettes, il s'avèrerait inexploitable, dans la mesure où la vitesse de rotation de la tête de contrôle et la constance de cette vitesse au cours du temps ne peuvent être garanties avec une précision suffisante. De ce fait, il n'est pas possible de réaliser des mesures bien localisées par rapport aux facettes de la surface intérieure de la gaine tubulaire.

Le but de l'invention est donc de proposer un procédé de contrôle par ultrasons de facettes sur la surface intérieure de la paroi d'une gaine tubulaire comportant une surface intérieure de forme sensiblement prismatique présentant des facettes successives, ce procédé permettant en particulier de contrôler de manière très précise le nombre des facettes de la gaine et l'amplitude de ces facettes dans la direction périphérique de la surface intérieure de la gaine ainsi que la variation d'épaisseur de la gaine sur un tour.

Dans ce but :
- on émet des ondes ultrasonores sous forme d'impulsions depuis l'extérieur de la gaine de manière que les ondes ultrasonores dirigées vers l'intérieur de la gaine traversent la paroi de la gaine et assurent un balayage de la paroi sur toute sa périphérie,
- on règle la fréquence d'émission des impulsions ultrasonores en fonction de la vitesse de balayage circonférentiel de la gaine, de manière que la fréquence d'émission soit égale à un multiple entier de la fréquence de balayage des facettes de la gaine,
- on enregistre un signal ultrasonore réfléchi par la surface intérieure de la paroi de la gaine, et
- on analyse le signal réfléchi pour réaliser le contrôle des facettes.

L'invention concerne également un dispositif permettant de mettre en oeuvre le procédé de contrôle par ultrasons des facettes d'une gaine tubulaire.

Afin de bien faire comprendre l'invention, on va maintenant décrire, à titre d'exemple non limitatif, en se référant aux figures jointes en annexe, un dispositif permettant de mettre en oeuvre le procédé de contrôle suivant l'invention et sa mise en oeuvre pour le contrôle de gaines tubulaires pour crayons combustibles comportant des facettes sur leur surface interne.

La figure 1 est une vue schématique d'un dispositif permettant de mettre en oeuvre le procédé suivant l'invention.

La figure 2 est une vue en perspective d'une gaine tubulaire pour combustible nucléaire sur laquelle on effectue un contrôle par le procédé suivant l'invention.

La figure 3 est une vue en coupe transversale d'une partie d'un tube à facettes sur lequel on effectue un contrôle par le procédé suivant l'invention.

La figure 4 est une vue en projection sur un plan diamétral, de la surface intérieure du tube représenté sur la figure 3.

La figure 5 est un diagramme montrant un signal représentatif de l'épaisseur d'un tube à facettes, pendant son contrôle par un procédé suivant l'invention.

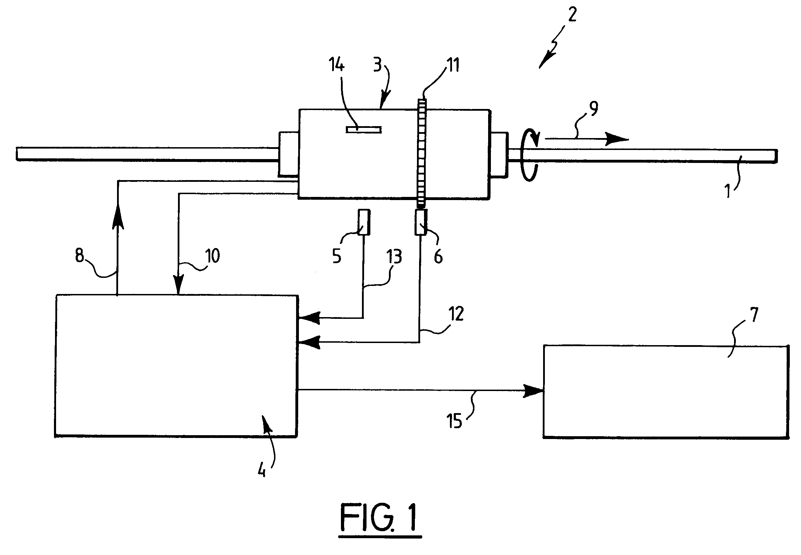

Sur la figure 1, on voit un dispositif de contrôle par ultrasons d'une gaine tubulaire 1 d'un crayon combustible pour réacteur nucléaire, désigné de manière générale par le repère 2.

Le dispositif de contrôle 2 comporte une tête de contrôle ultrasonore 3 de forme tubulaire qui est engagée, dans une disposition sensiblement coaxiale, autour du tube 1, une unité d'alimentation et de traitement 4, des sondes 5 et 6 disposées au voisinage de la surface latérale externe de la tête 3 et un dispositif d'alarme 7 relié à la sortie de l'unité d'alimentation et de traitement 4.

La tête de contrôle ultrasonore 3 comporte un corps cylindrique qui peut être entraîné en rotation à très grande vitesse autour de son axe, par des moyens non représentés. La tête de contrôle ultrasonore 3 comporte également un ou plusieurs transducteurs permettant d'émettre des ondes ultrasonores vers l'intérieur en direction de l'axe de la tête de contrôle ultrasonore et/ou de capter les ondes ultrasonores réfléchies par le tube 1 et en particulier les ondes ultrasonores ayant traversé la paroi du tube 1 qui sont réfléchies par la surface intérieure du tube.

Les transducteurs sont alimentés en courant électrique d'excitation par une ligne d'alimentation 8 assurant la liaison entre un circuit d'alimentation en courant électrique de l'unité d'alimentation et de traitement 4 et les transducteurs de la tête de contrôle 3.

Le contrôle par ultrasons de l'épaisseur de la gaine tubulaire 1 d'un crayon combustible, sur toute sa longueur, peut être réalisé en déplaçant le tube 1, à l'intérieur de la tête de contrôle 3 et suivant son axe, comme indiqué par la flèche 9. La tête 3 est mise en rotation à très grande vitesse, de manière qu'on réalise, lors du défilement du tube dans la direction de la flèche 9, un balayage hélicoïdal de toute sa paroi, par un faisceau d'ondes ultrasonores émis par un transducteur de la tête de contrôle 3.

Il est également possible de déplacer la tête 3, à la fois en rotation et en translation le long du tube 1, pour réaliser le balayage de la paroi du tube 1.

Une installation telle que représentée sur la figure 1 peut être utilisée, pour réaliser le contrôle d'épaisseur d'une gaine tubulaire présentant une surface interne cylindrique lisse.

On alimente le transducteur de la tête de contrôle 3 en courant électrique, de manière à produire des ondes ultrasonores, sous la forme de trains d'ondes ou impulsions à certains intervalles de temps, pendant la rotation et le déplacement de la tête par rapport au tube 1.

Les ondes ultrasonores pénètrent radialement dans la paroi du tube 1 et sont réfléchies par sa surface intérieure pour être récupérées par un transducteur de la tête de contrôle 3.

Le décalage temporel entre le train d'ondes émis et le train d'ondes réfléchi et récupéré traduit le temps de parcours des ultrasons dans la paroi du tube et permet de fournir un signal représentatif de l'épaisseur du tube qui est élaboré par l'unité de traitement 4 à partir du signal des ondes ultrasonores réfléchi qui est envoyé à l'unité de traitement 4 par la ligne de transmission 10.

On peut ainsi disposer d'un signal qui peut être exploité pour le contrôle de l'épaisseur de la paroi du tube.

Suivant la fréquence de répétition des trains d'ondes ultrasonores en fonction de la vitesse de rotation de la tête de contrôle 3, on peut disposer d'un certain nombre de mesures par tour de la tête de contrôle 3 autour du tube 1, lors de la rotation de la tête 3 autour du tube permettant de réaliser un balayage circonférentiel du tube 1 par les ondes ultrasonores.

Dans le cas d'un tube 1 à facettes, c'est-à-dire d'un tube dont la surface intérieure de la paroi présente une forme prismatique, constituée de facettes planes successives ayant une largeur sensiblement constante dans la direction circonférentielle, le signal d'épaisseur obtenu par le dispositif qui vient d'être décrit ne permet pas, de manière générale, un contrôle des facettes du tube 1, c'est-à-dire un contrôle du nombre et de la largeur des facettes.

En effet, si la fréquence de répétition des impulsions ultrasonores est indépendante de la fréquence de balayage des facettes du tube par les ondes ultrasonores, les ondes ultrasonores sont réfléchies par des facettes qui ne sont généralement pas des facettes successives du tube et par des zones de ces facettes ayant une position quelconque par rapport aux arêtes de la surface prismatique.

On ne peut donc rien tirer du signal de mesure d'épaisseur en ce qui concerne les facettes du tube 1.

Selon l'invention, le corps de la tête de contrôle 3 porte une couronne dentée 11 coaxiale à l'enveloppe cylindrique de la tête de contrôle 3 et fixée sur sa surface externe.

La sonde 6 qui est constituée de préférence par une sonde de Hall est disposée en vis-à-vis de la couronne 11 de manière à détecter le passage des dents de la couronne. La sonde 6 est reliée par un conducteur 12 à l'unité de traitement 4.

Le signal de la sonde 6 est utilisé dans l'unité de traitement 4 pour commander les impulsions d'alimentation du transducteur de la tête de contrôle 3, de manière que la fréquence de répétition des trains d'ondes ultrasonores émis par le transducteur en direction de la paroi du tube 1 soit égale à la fréquence de balayage des facettes du tube 1 par les ondes ultrasonores ou encore égale à un multiple entier de cette fréquence.

L'asservissement de l'alimentation du transducteur au signal de la sonde 6 permet de réaliser de manière très simple cette synchronisation des impulsions ultrasonores par rapport au balayage des facettes et d'éviter toute dérive provenant de variations de la vitesse de rotation de la tête de contrôle 3. En effet, si l'on fixe la fréquence de répétition des trains d'ondes ultrasonores à une certaine valeur correspondant à la fréquence de balayage des facettes pour une vitesse de rotation déterminée de la tête de contrôle, on observe très rapidement une dérive, du fait que la vitesse de rotation de la tête de contrôle 3 ne peut pas être fixée et maintenue à une valeur suffisamment précise pour réaliser les mesures en synchronisme.

Une telle mesure effectuée au niveau des facettes ne serait donc pas stable et subirait un "décrochement" au bout de quelques instants.

En revanche, l'utilisation de la sonde de synchronisme 6 permet de régler exactement la fréquence des impulsions ultrasonores sur la vitesse de rotation de la tête, quelles que soient cette vitesse et ses variations.

On utilisera une couronne dentée dont le nombre de dents est un multiple entier du nombre de facettes du tube 1.

Par exemple, dans le cas d'un tube 1 comportant une surface intérieure prismatique ayant trente facettes, on peut utiliser une couronne comportant 120 dents si bien que le passage des dents au niveau de la sonde 6 produit un signal dont la fréquence est quatre fois plus élevée que la fréquence de balayage des facettes du tube 1. Ce signal permet de commander l'alimentation du transducteur de manière à produire des impulsions ultrasonores dont la fréquence peut être égale à la fréquence de balayage des facettes ou égale à un multiple entier de cette fréquence, par exemple égale à quatre fois la fréquence de balayage des facettes.

On peut ainsi réaliser soit une seule mesure d'épaisseur pour chacune des facettes, dans une position bien déterminée de la facette, par exemple suivant une arête de jontion, ou encore plusieurs mesures permettant d'explorer la facette sur toute sa largeur.

Le corps de la tête de contrôle 3 porte de plus sur sa surface externe, un témoin 14, par exemple en matériau magnétique dont le passage peut être repéré par la sonde 5 qui est reliée par un conducteur 13 à l'unité de traitement 4.

Les passages successifs du témoin 14 en face de la sonde de contrôle de rotation 5 permettent d'émettre un signal représentatif des tours effectués par la tête de contrôle 3 autour du tube 1.

La comparaison du signal d'épaisseur et du signal représentatif de la rotation de la tête permet de réaliser un comptage du nombre des facettes du tube.

L'unité de traitement 4 comporte un moyen de comparaison du nombre de facettes mesuré au cours d'un tour de la tête de contrôle 3 avec le nombre voulu de facettes, par exemple trente.

Dans le cas où une différence est détectée, un signal est transmis par le conducteur 15 à l'unité d'alarme 7 qui émet un message à l'intention de l'opérateur chargé du contrôle.

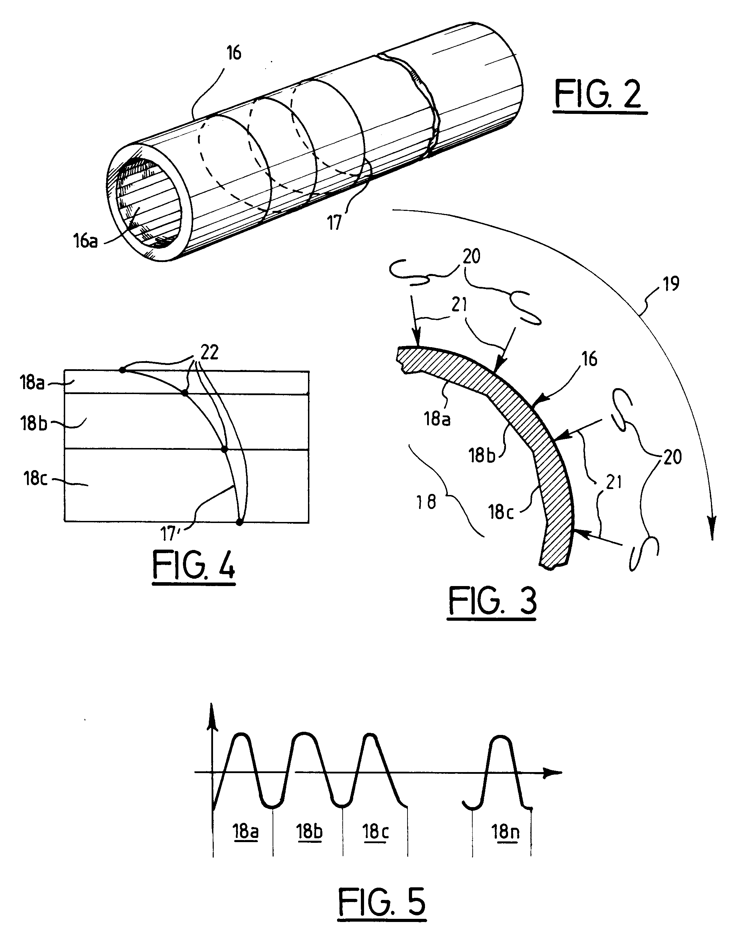

Sur la figure 2 on a représenté une gaine tubulaire à facettes 16 comportant une surface interne 16a de forme prismatique et une surface extérieure cylindrique. Sur la surface extérieure cylindrique de la gaine tubulaire 16, on a représenté la trajectoire de balayage hélicoïdale 17 du tube par des ondes ultrasonores d'une tête de contrôle telle que la tête 3 représentée sur la figure 1, dans le cas d'un déplacement relatif de la gaine tubulaire 16 et de la tête de contrôle en rotation et en translation axiale. La trajectoire 17 peut présenter un pas de faible longueur, par exemple 2 mm, pour réaliser un balayage sensiblement continu du tube sur toute sa longueur, dans le cas d'un contrôle d'épaisseur.

Comme il est visible sur la figure 3, la paroi du tube 16 est délimitée intérieurement par des facettes successives 18 qui sont sensiblement de même largeur et qui constituent une surface prismatique régulière ayant pour axe l'axe du tube 16.

On a représenté par une flèche circulaire 19, autour de la surface extérieure du tube 16, la trajectoire d'un transducteur d'une tête de contrôle mise en rotation autour du tube 16.

Un dispositif de synchronisation des impulsions ultrasonores émises par le transducteur, tel que décrit en regard de la figure 1, permet d'émettre des impulsions ultrasonores 20, successivement autour de la surface extérieure du tube 16, de manière que ces impulsions ultrasonores 20 dirigées radialement comme indiqué par les flèches 21 viennent rencontrer les facettes successives 18a, 18b, 18c, au niveau des arêtes de jonction de ces facettes.

Le signal d'épaisseur correspondant obtenu à partir des impulsions ultrasonores correspond à des valeurs constantes et égales à la valeur minimale de l'épaisseur de la paroi du tube.

Comme il est visible sur la figure 4, la trajectoire hélicoïdale 17' qui correspond à la projection radiale de la trajectoire 17 sur la surface intérieure du tube 16 recoupe les arêtes de séparation des facettes 18a, 18b, 18c au niveau des points de mesure 22.

Dans le cas d'un tube présentant un défaut, par exemple un nombre de facettes différent de la valeur voulue ou des facettes d'amplitude non constante, le signal d'épaisseur présente une anomalie qui peut être détectée de manière automatique, ce qui se traduit par le déclenchement d'une alarme.

Comme représenté sur la figure 5, lorsqu'on réalise une exploration de chacune des facettes suivant sa largeur, le signal d'épaisseur, pour chacune des facettes présente une forme sensiblement sinusoïale, l'épaisseur étant minimale au niveau des arêtes de jonction de chacune des facettes 18a, 18b, 18c, ..., 18n et maximale pour une position située au milieu de la facette, à égale distance des deux arêtes.

On peut aisément contrôler le nombre des facettes par tour de la tête de contrôle, par exemple en effectuant un comptage des signaux sinusoïdaux ou de leurs maxima.

On peut également effectuer un contrôle d'amplitude de chacune des facettes en comparant le signaux sinusoïdaux successifs.

On peut également contrôler la variation d'épaisseur de la gaine tubulaire sur un tour complet.

La mesure de l'amplitude des facettes peut être réalisée, comme il vient d'être décrit, lors d'un balayage hélicoïdal pendant le défilement de la gaine tubulaire à l'intérieur de la tête de contrôle.

On effectue la mesure de l'amplitude et du nombre des facettes au cours d'un tour complet dont la durée est déterminée par la sonde de mesure de rotation de la tête.

On peut alors compter le nombre de maxima ou de minima du signal représentatif de l'épaisseur, pendant une durée correspondant à la durée d'un tour complet.

Cette méthode de balayage du tube sur toute sa longueur peut être coûteuse, du fait du très grand nombre de points de mesure à traiter pendant le défilement du tube. Cependant, dans la plupart des cas, le balayage de toute la longueur du tube n'est pas nécessaire, les études ayant montré que les facettes sont pratiquement constantes en nombre et en amplitude suivant toute la longueur d'un tube.

Il est donc possible de réaliser la vérification du nombre des facettes et la mesure de l'amplitude des facettes dans une seule section d'un tube ou sur un seul pas d'une trajectoire hélicoïdale.

Dans tous les cas, le procédé suivant l'invention permet de détecter un nombre défecteux de facettes ou des facettes dont l'amplitude n'est pas conforme aux caractéristiques idéales du tube à facettes.

L'invention ne se limite pas au mode de réalisation qui a été décrit.

C'est ainsi que la synchronisation des impulsions ultrasonores par rapport au balayage des facettes peut être réalisée par des moyens différents d'une couronne dentée solidaire de la tête de contrôle ultrasonore et d'une sonde de Hall. Ce dispositif permet toutefois d'élaborer un signal qui dépend directement de la vitesse de rotation de la sonde et dont la fréquence est liée directement à la fréquence de balayage des facettes.

On peut imaginer tout type de traitement des signaux des transducteurs ultrasonores et des signaux produits par les sondes de synchronisation ou de contrôle de rotation. On peut également imaginer tout type d'alimentation des transducteurs pouvant être pilotée pour permettre la formation de trains d'ondes ultrasonores à la fréquence voulue.

Bien entendu, le procédé et le dispositif suivant l'invention peuvent être utilisés pour réaliser le contrôle de tubes à facettes différents de gaines tubulaires de crayons combustibles pour réacteur nucléaire.

## Revendications

**1.-** Procédé de contrôle par ultrasons de facettes (18a, 18b, 18c) sur la surface intérieure de la paroi d'une gaine tubulaire (1, 16) comportant une surface intérieure de forme sensiblement prismatique présentant des facettes successives (18a, 18b, 18c) caractérisé par le fait :
- qu'on émet des ondes ultrasonores sous forme d'impulsions depuis l'extérieur de la gaine (1, 16) de manière que les ondes ultrasonores dirigées vers l'intérieur de la gaine traversent la paroi de la gaine (1, 16) et assurent un balayage de la paroi sur toute sa périphérie,
- qu'on règle la fréquence d'émission des impulsions ultrasonores en fonction de la vitesse de balayage circonférentielle de la gaine (1, 16), de manière que la fréquence d'émission soit égale à un multiple entier de la fréquence de balayage des facettes (18a, 18b, 18c) de la gaine (1, 16),
- qu'on enregistre un signal ultrasonore réfléchi par la surface intérieure de la paroi de la gaine (1, 16), et
- qu'on analyse le signal réfléchi pour réaliser le contrôle des facettes (18a, 18b, 18c).

**2.-** Procédé suivant la revendication 1, caractérisé par le fait que le signal réfléchi est converti en un signal représentatif de l'épaisseur de la paroi de la gaine (1, 16) au niveau d'au moins un point de chacune des facettes successives (18a, 18b, 18c) de la paroi de la gaine (1,, 16).

**3.-** Procédé suivant la revendication 2, caractérisé par le fait qu'on règle la fréquence d'émission des impulsions ultrasonores à une valeur égale à la fréquence de balayage des facettes (18a, 18b, 18c) de la gaine (1, 16), de manière à obtenir un signal représentatif de l'épaisseur de la gaine en un point défini de chacune des facettes successives (18a, 18b, 18c) et qu'on réalise un comptage du nombre des facettes (18a, 18b, 18c) sur toute la circonférence de la gaine (1, 16).

**4.-** Procédé suivant la revendication 3, caractérisé par le fait qu'on déclenche une alarme lorsque le nombre de facettes (18a, 18b, 18c) déterminé est différent d'un nombre de facettes prédéterminé.

**5.-** Procédé suivant la revendication 2, caractérisé par le fait qu'on règle la fréquence d'émission des impulsions ultrasonores à une valeur correspondant à un multiple entier de la fréquence de balayage des facettes de la gaine, de manière à obtenir un signal représentatif de l'épaisseur de la paroi de la gaine (1, 16) en plusieurs points de chacune des facettes (18a, 18b, 18c) et qu'on déduit du signal d'épaisseur, le nombre des facettes (18a, 18b, 18c) sur toute la circonférence de la gaine (1, 16) et l'amplitude des facettes (18a, 18b, 18c) dans une direction circonférentielle.

**6.-** Procédé suivant la revendication 5, caractérisé par le fait qu'on émet un signal, lorsque le nombre des facettes ou l'amplitude d'une facette (18a, 18b, 18c) sont différents de valeurs prédéterminées.

**7.-** Procédé suivant l'une quelconque des revendications 1 à 6, caractérisé par le fait qu'on réalise un balayage de la paroi de la gaine (1, 16) suivant une trajectoire hélicoïdale (17).

**8.-** Procédé suivant l'une quelconque des revendications 1 à 6, caractérisé par le fait qu'on réalise un balayage de la paroi de la gaine (1, 16), suivant une trajectoire circulaire.

**9.-** Dispositif de contrôle par ultrasons de facettes sur la surface intérieure de la paroi d'un tube (1, 16) comportant une surface intérieure de forme sensiblement prismatique présentant des facettes successives (18a, 18b, 18c) caractérisé par le fait qu'il comporte une tête de contrôle ultrasonore (3) ayant une enveloppe tubulaire de forme cylindrique et au moins un transducteur dirigé pour émettre des ondes ultrasonores en direction de l'axe de la tête de contrôle (3), une couronne dentée (11) fixée de manière coaxiale à l'enveloppe de la tête de contrôle (3) sur la surface latérale externe du corps de la tête de contrôle (3), une sonde (6) de détection du passage de dents de la couronne dentée (11) lors de la rotation de la tête de contrôle (3) autour de son axe et une unité de traitement et d'alimentation (4) comportant un moyen d'alimentation électrique du transducteur de la tête de contrôle (3) par impulsions dont la fréquence de répétition est réglée à une valeur proportionnelle à la fréquence du signal de passage des dents de la couronne dentée (11) de la tête de contrôle (3).

**10.-** Dispositif suivant la revendication 9, caractérisé par le fait qu'il comporte de plus, un moyen de repérage (14) sur la surface latérale extérieure du corps de la tête de contrôle (3) et une sonde (5) de détection du passage du moyen de repérage (14), lors de la rotation de la tête de contrôle (3) autour de son axe.

**11.-** Dispositif suivant l'une quelconque des revendications 9 et 10, caractérisé par le fait qu'il comporte de plus un dispositif d'alarme automatique (7) relié à l'unité de traitement (4) comportant des moyens d'alarme déclenchables automatiquement par des moyens d'analyse et de comparaison d'un signal reçu par le transducteur de la tête de contrôle (3).
